# EUROPÄISCHE PATENTANMELDUNG

(11) **EP 0 583 530 A1**
(43) Veröffentlichungstag der Anmeldung: **23.02.1994**
(21) Anmeldenummer: 92810627.7
(22) Anmeldetag: 17.08.1992
(51) Int. Cl.: H02K 37/02, H02K 37/04, H02K 37/06, H02K 41/03, H02K 19/20

(54) **Elektromotor**

(71) Anmelder: GERHARD FENKART PROTOTYPENBAU, CH-8117 Fällanden (CH)
(72) Erfinder: GERHARD FENKART PROTOTYPENBAU, CH-8117 Fällanden (CH)
(74) Vertreter: Hammer, Bruno, Dr.

(57) **Zusammenfassung**

Der Elektromotor basiert auf dem Prinzip von Reluktanzmotoren und besteht aus einem zylinderförmigen Rotor (31) aus weichmagnetischem Material mit Drehwelle (10a), wobei deren Drehzentrum (10) zudem einer von mindestens einem ringförmigen Stator (S) gebildeten Mittellinie entspricht. An der dem Stator (S) zugewandten Oberfläche weist der Rotor (31) Polzähne (12) auf. Ein Stator (S) weist mindestens drei unabhängige, ein Magnetfeld erzeugende Vorrichtungen (4a, 4b, 4c) auf, wobei jede dieser Vorrichtungen ringförmig, senkrecht zum Drehzentrum (10) stehend und konzentrisch zum Drehzentrum (10) verlaufend ausgebildet sind. Jede der ein Magnetfeld erzeugenden Vorrichtungen (4a, 4b, 4c) weist in Richtung des magnetischen Flusses ein ringförmiges, metallisches Flussleitsystem auf, das sich aus Endblechen (2e, 2h) und/oder Zwischenblechen (2f, 2g) zusammensetzt. Das Flussleitsystem verbindet eine Anzahl von Polzähnen (3N) mit einer Anzahl Polzähne (3S) entgegengesetzter Polarität, wobei die Polzähne (3N) und Polzähne (3S) rotorseitig durch einen Luftspalt getrennt sind. Jeweils eine ein Magnetfeld erzeugende Vorrichtung (4a, 4b, 4c) bildet zusammen mit einem Flussleitsystem ein Statorsegment. Die Erregerwicklungen (4a, 4b, 4c) sind vorzugsweise durch kontaktlose Schalter derart ansteuerbar, dass im Stator (S) ein sich drehendes Mangetfeld entsteht und dadurch der Rotor (31) eine Rotation erfährt, indem er dauernd eine Stellung minimaler Reluktanz zu erlangen sucht.

## Beschreibung

Die Erfindung bezieht sich auf einen Elektromotor, insbesondere einen Reluktanzmotor gemäss dem Oberbegriff von Anspruch 1. Weiter bezieht sie sich auf Anzeigeinstrumente betrieben mit der erfindungsgemässen Vorrichtung.

Unter dem Begriff Reluktanzmotor versteht man im weiten Sinne Motoren, bei denen durch einen Stator ein veränderliches magnetisches Feld erzeugt wird, und der Rotor üblicherweise Pole ohne Wicklungen aus ferromagnetischem Material aufweist, wobei der Rotor im magnetischen Feld bestrebt ist, sich nach einer Lage minimaler Reluktanz auszurichten. Die Ausrichtung des magnetischen Feldes im Stator lässt sich bezüglich dem Drehzentrum des Rotors schrittweise oder fortlaufend verändern, so dass der Rotor sich entweder entsprechend um einen diskreten Winkelbetrag oder kontinuierlich bewegt. Prinzipiell können die Funktionen von Rotor und Stator vertauscht werden, wobei das rotierende Feld in der Praxis üblicherweise durch den Stator erzeugt wird, um Schleifringe oder Kommutatoren zu vermeiden. Der Rotor kann aus Weicheisen bestehen und die magnetische Polarisation des Rotors durch das elektromagnetische Statorfeld erfolgen, was üblicherweise im engeren Sinn als Reluktanzmotor bezeichnet wird. Im Rotor kann jedoch auch ein Permanentmagnet untergebracht sein, der die Pole des Rotors permanent polarisiert, was zum Beispiel in Schrittmotoren oder in Formen bürstenloser Gleichstrommotoren (Brushless DC) Anwendung findet.

Der Bereich möglicher Anwendungen von Reluktanzmotoren hat sich in Kombination mit der Stromrichtertechnik markant erweitert. Die durch den Stator fliessenden Ströme werden in modernen Bauweisen durch kontaktlose Schalter geschaltet, um im Stator ein veränderliches elektromagnetisches Feld zu erzeugen. Dies bewirkt entsprechende Winkelbewegungen des Rotors, da dessen Pole bestrebt sind, innerhalb des Magnetfeldes eine Lage minimaler Reluktanz aufrecht zu erhalten. Die Rotorbewegungen können in diskreten Schritten erfolgen, die individuell kontrollierbar sind und deren Rotationsrichtung vorgebbar ist. Eine entsprechende Ansteuerung der Statorwindungen erlaubt mehrere diskrete Schritte unmittelbar nacheinander auszuführen, so dass Winkelbereiche kontinuierlich durchfahrbar sind oder eine kontinuierliche Rotation entsteht.

Es ist Aufgabe der vorliegenden Erfindung einen Reluktanzmotor mit weichmagnetischem Rotor zu ermöglichen, der als Schrittmotor betrieben eine Schrittweite von wenigen Winkelgraden aufweist, sich durch eine kleine Baugrösse und ein relativ grosses Drehmoment auszeichnet und kostengünstig herstellbar ist.

Die Erfindung löst die Aufgabe gemäss den kennzeichnenden Merkmalen von Anspruch 1. Die abhängigen Ansprüche beziehen sich auf vorteilhafte Weiterbildungen der Erfindung. Weiter bezieht sich die Erfindung auf Anzeigeinstrumente betrieben mit der erfindungsgemässen Vorrichtung.

Der Elektromotor basiert auf dem Prinzip von Reluktanzmotoren und besteht aus einem zylinderförmigen Rotor aus weichmagnetischem Material mit Drehwelle, wobei deren Drehzentrum zudem einer von mindestens einem ringförmigen Stator S gebildeten Mittellinie entspricht. An der dem Stator S zugewandten Oberfläche des Rotors sind Nuten eingebracht, die parallel zum Drehzentrum verlaufen, derart, dass sich zwischen den Nuten polförmige Flächen ergeben, die als Polzähne dienen, wobei die Polzähne in Drehrichtung des Rotors gegenseitig regelmässig mit einem Winkel α beabstandet sind. Ein Stator weist mindestens drei unabhängige, ein Magnetfeld erzeugende Vorrichtungen auf, die in Richtung des Drehzentrums nebeneinander angeordnet sind, wobei jede der ein Magnetfeld erzeugenden Vorrichtung ringförmig, senkrecht zum Drehzentrum stehend und konzentrisch zum Drehzentrum verlaufend ausgebildet ist. Jede der ein Magnetfeld erzeugenden Vorrichtungen weist in Richtung des magnetischen Flusses ein ringförmiges, metallisches, magnetisches Flussleitsystem auf, das sich aus Endblechen und/oder Zwischenblechen zusammensetzt. Das Flussleitsystem verbindet eine Anzahl von Polzähnen mit einer üblicherweise gleichen Anzahl Polzähne entgegengesetzter Polarität, wobei die Polzähne entgegengesetzter Polarität rotorseitig durch einen Luftspalt getrennt sind. Jeweils eine ein Magnetfeld erzeugende Vorrichtung bildet zusammen mit einem Flussleitsystem ein Statorsegment. Die Polzähne sind in jedem Statorsegment vorzugsweise gleichmässig über den Umfang der dem Rotor zugewandten Seite verteilt und verlaufen vorzugsweise parallel zum Drehzentrum des Rotors. Die Erregerwicklungen sind vorzugsweise durch kontaktlose Schalter derart ansteuerbar, dass im Stator ein sich drehendes Mangetfeld entsteht und dadurch der Rotor eine Rotation erfährt, indem er dauernd eine Stellung minimaler Reluktanz zu erlangen sucht.

Die Vorteile der Erfindung sind darin zu sehen, dass der Reluktanzmotor als Schrittmotor betreibbar ist und dadurch in Verbindung mit einer geeigneten Ansteuervorrichtung unmittelbar digital ansteuerbar ist, und dass der Reluktanzmotor eine hohe Drehwinkelauflösung von beispielsweise 60 Schritten pro Umdrehung oder mehr aufweist. Weiter wirkt sich vorteilhaft aus, dass sich der erfindungsgemässe Reluktanzmotor aus sehr wenigen, und teilweise identischen Teilkomponenten zusammensetzt, was eine kostengünstige Herstellung erlaubt. Der Reluktanzmotor ist auch in sehr kleinen Baugrössen herstellbar und weist zudem ein relativ grosses Drehmoment auf, weshalb auf Zwischenglieder wie Getriebe verzichtet werden kann.

Der Reluktanzmotor eignet sich zum Beispiel für Zeigerinstrumente, deren Zeiger nur eine definierte Anzahl diskreter Positionen einnehmen kann, insbesondere für quasianaloge Zeigerinstrumente, deren Schrittweite derart gewählt ist, dass für einen Beobachter eine scheinbar kontinuierliche Anzeige resultiert. Der Reluktanzmotor eignet sich zum Beispiel um unmittelbar und ohne Zwischenglieder wie Getriebe über eine Welle den Zeiger eines quasianalogen Anzeigeinstrumentes zu betätigen. Die Einfachheit des Aufbaus von Einzelteilen und des gesamten Reluktanzmotors machen den Motor geeignet für Kleinstausführungen.

In der vorliegenden Beschreibung wird der Reluktanzmotor immer im motorischen Betriebsmodus dargestellt. Natürlich ist der erfindungsgemässe Reluktanzmotor ebenfalls als Generator betreibbar, z.B. mittels einer Vier-QuadrantenAnsteuerung. Der generatorische Betriebsmodus ist z.B. anwendbar, um generell Elektrizität zu erzeugen, um den Rotor des Reluktanzmotors abzubremsen, oder als Messwandler, um die Drehzahl eines Objektes zu bestimmen.

Im folgenden wird die Erfindung anhand von Ausführungsbeispielen beschrieben. Es zeigen:
- Fig. 1a: eine perspektivische Ansicht eines Ausschnittes eines Statorsegmentes mit Erregerspule;
- Fig. 1b: eine perspektivische Ansicht eines Ausschnittes eines weiteren Statorsegmentes mit Erregerspule;
- Fig. 2: eine perspektivische Ansicht eines Ausschnittes eines Statorsegmentes mit Permanentmagnet;
- Fig. 3a: eine perspektivische Ansicht eines Ausschnittes eines weichmagnetischen Rotors;
- Fig. 3b: eine perspektivische Ansicht eines Ausschnittes eines weichmagnetischen Rotors mit schräg verlaufenden Polen;
- Fig. 3c: eine perspektivische Ansicht eines Ausschnittes eines Rotors mit gegenseitig versetzten Rotorsegmenten;
- Fig. 4: eine Explosionszeichnung eines 3-Phasen-Reluktanzmotors;
- Fig. 5: einen Querschnitt durch einen Reluktanzmotor konzipiert als Innenläufer;
- Fig. 6: einen Querschnitt durch einen Reluktanzmotor konzipiert als Aussenläufer;
- Fig. 7: einen Querschnitt durch einen Reluktanzmotor konzipiert als Ringläufer;
- Fig. 8: eine Abwicklung der dem Rotor zugewandten Seite des Stators mit der gegenseitigen Lage der Polzähne von Stator und Rotor;
- Fig. 9a: die zeitliche Abfolge der Ansteuerung der Erregerwicklungen von drei Statorsegmenten;
- Fig. 9b: die zeitliche Abfolge der Ansteuerung der Erregerwicklungen dreier Statorsegmenten für eine Drehung in entgegengesetzter Richtung;
- Fig. 10a: eine weitere zeitliche Abfolge der Ansteuerung der Erregerwicklungen zur feineren Positionierung des Rotors;
- Fig. 10b: eine weitere zeitliche Abfolge der Ansteuerung der Erregerwicklungen zur feineren Positionierung des Rotors für eine Drehung in entgegengesetzter Richtung.
- Fig. 11a: die zeitliche Abfolge der Ansteuerung bei zwei aktiven Erregerwicklungen im Stator;
- Fig. 11b: die zeitliche Abfolge der Ansteuerung bei zwei aktiven Erregerwicklungen im Stator für eine Drehung in entgegengesetzter Richtung;
- Fig. 12a: eine weitere zeitliche Abfolge der Ansteuerung bei zwei aktiven Erregerwicklungen im Stator zur feineren Positionierung des Rotors;
- Fig. 12b: eine weitere zeitliche Abfolge der Ansteuerung zur feineren Positionierung des Rotors für eine Drehung in entgegengesetzter Richtung.

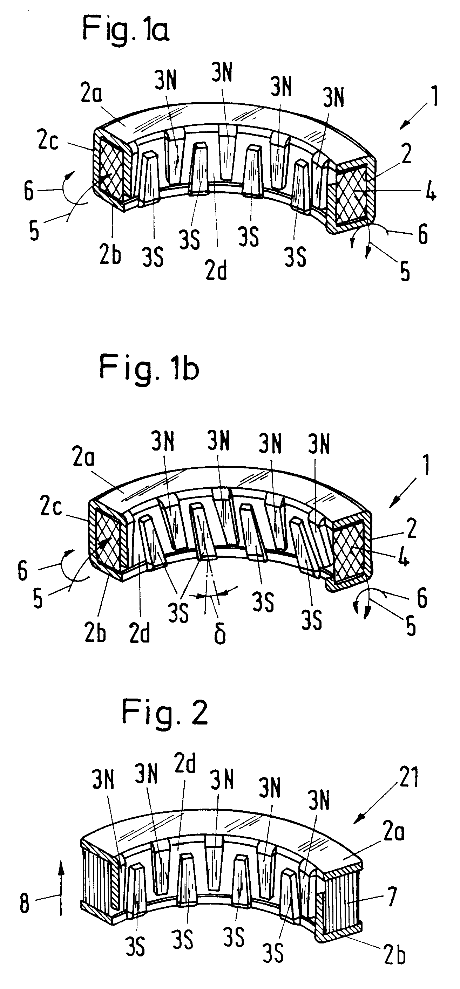

Fig. 1a zeigt einen Ausschnitt eines kreisförmigen Statorsegmentes 1, das eine kreisförmige Erregerwicklung 4 aufweist. Die Stromrichtung 5 im elektrischen Leiter der Erregerwicklung 4 erzeugt ein Magnetfeld 6. Der Strom 5 durch die Erregerwicklung 4 kann natürlich auch in entgegengesetzter Richtung verlaufen oder aus einem Wechselfeld bestehen. Ein ringförmiges, magnetisches Flussleitsystem 2, besteht im vorliegenden Beispiel aus einem Eisenjochring mit den beiden seitlichen Teilen 2a, 2b sowie dem äusseren Teil des Eisenjochrings 2c. Der Eisenjochring 2 leitet den durch die Erregerwicklung 4 erzeugten magnetischen Fluss von den Polzähnen 3S zu den Polzähnen 3N entgegengesetzter Polarität. Im vorliegenden Ausführungsbeispiel sind die Polzähne 3S, 3N derart angeordnet, dass sie parallel zum Drehzentrum 10 des Rotors 31 zu liegen kommen. Die Polzähen 3S, 3N können auf der gleichen Linie fluchtend, parallel zum Drehzentrum 10, hintereinander, mit einem Luftspalt zwischen den Polzähnen 3S, 3N angeordnet sein. Im vorliegenden Ausführungsbeispiel sind die Polzähne 3S, 3N parallel zum Drehzentrum 10 angeordnet, jedoch alle gegenseitig um einen einheitlichen Abstandswinkel α in Drehrichtung 10c versetzt, derart, dass die Polzähne 3S und die entgegengesetzt polarisierten Polzähne 3N zu einem grossen Teil ihrer Länge nebeneinander zu liegen kommen. Das elektromagnetische Feld im Luftspalt zwischen den Polzähnen 3S und den Polzähnen 3N verläuft daher näherungsweise grossenteils parallel in der Richtung der Erregerwicklung 4, respektive in Drehrichtung 10c des Rotors. Zwischen den Polzähnen 3S, 3N und der Erregerwicklung 4 kann, wie dargestellt, eine nichtmagnetische Zwischenschicht 2d, zum Beispiel aus Kunststoff bestehend, angeordnet sein.

Die Polzähne 3N, 3S in Fig. 1b verlaufen nicht, wie in Fig. 1a, parallel zum Drehzentrum 10, sondern weisen gegenüber dieser Richtung einen spitzen Winkel δ auf. Die Polzähne 3N, 3S liegen jedoch weiterhin auf einer zylinderförmigen Oberfläche, deren Achse durch das Drehzentrum 10 verläuft. Die Polzähne 3N, 3S liegen entweder tangential an dieser zylinderförmigen Oberfläche oder sind derart geformt, dass sie sich der zylinderförmigen Oberfläche anschmiegen.

Fig. 2 zeigt einen Teilausschnitt eines weiteren Statorsegmentes, bei dem das magnetische Feld durch einen kreisförmigen Permanentmagneten 7 mit Magnetisierungsrichtung 8 erzeugt wird. Der magnetische Fluss wird durch die beidseitig unmittelbar auf dem Permanentmagnet 7 aufliegenden seitlichen Teile des Eisenjochrings 2a, 2b den Polzähnen 3S, 3N zugeleitet. Die Polzähne 3N, 3S sind in Fig. 2 wie auch in Fig. 1 entweder mit einem möglichst kleinen Luftspalt an die seitlichen Teile der Eisenjochringe 2a, 2b angeordnet, oder die Polzähne 3N, 3S weisen eine metallische Verbindung zum seitlichen Teil des Eisenjochrings 2a, 2b auf, in dem der Polzahn 3N, 3S sowie der seitliche Teil des Eisenjochrings 2a, 2b z.B. aus einem einzigen metallischen Stück gefertigt sind.

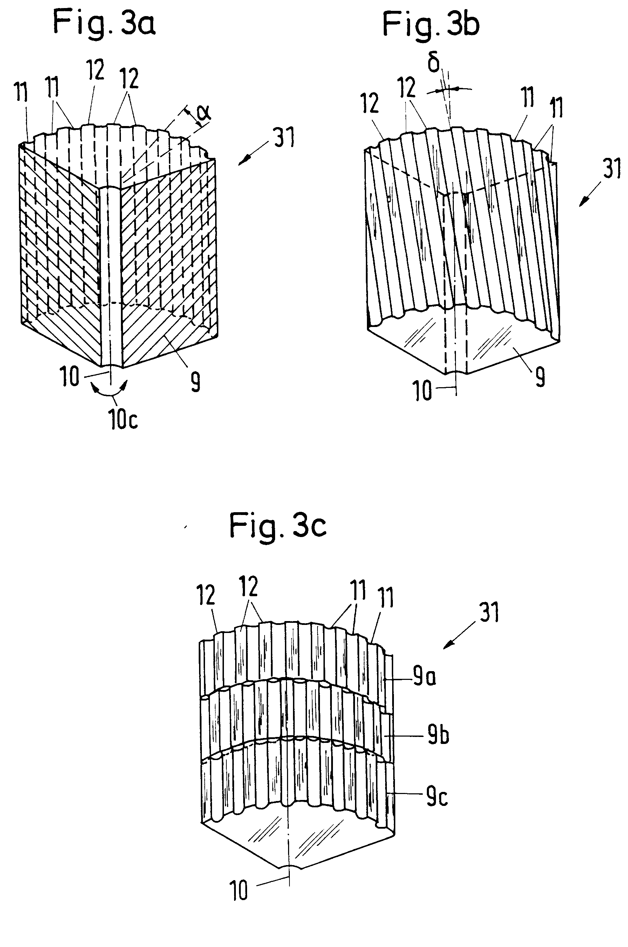

Fig. 3a zeigt einen zylinderförmigen Rotor 31 aus weichmagnetischem Material mit dem Drehzentrum 10 sowie mit der Drehrichtung 10c der Achse. An der zylinderförmigen Oberfläche des Rotors 31 sind parallel zum Drehzentrum 10 Nuten 11 eingebracht, derart, dass zwischen zwei benachbarten Nuten 11 polförmige Flächen wie Polzähne 12 entstehen. Im vorliegenden Ausführungsbeispiel weisen die Nuten 11 respektiv die Polzähne 12 über den gesamten Rotorumfang einen konstanten Abstandswinkel α auf. In den mit Fig. 1a, Fig. 1b sowie Fig. 2 dargestellten Ausführungsbeispielen von Statorsegmenten 1,21 weisen in Drehrichtung 10c benachbarte Polzähne 3S, 3N den identischen Abstandswinkel α auf. Fig. 3a zeigt den Rotor 31 als Vollzylinder, wobei sich jedoch auch ein Hohlzylinder als Rotor eignet.

Fig. 3b zeigt eine weitere Ausführungsform eines Rotors 31, dessen in die kreisförmige Zylinderoberfläche eingelassenen Nuten 11 nicht parallel zum Drehzentrum 10 verlaufen, sondern derart, dass die Nuten 11 sowie Polzähne 12 wohl geradelinig, aber unter einem einheitlichen Winkelversatz δ zu der durch das Drehzentrum 10 des Rotors 31 vorgegebenen Richtung stehen.

Fig. 3c zeigt eine weitere Ausführungsform eines Rotors 31, dessen Nuten 11 und Polzähne 12 einheitlich mit einem Abstandswinkel α beabstandet sind und parallel zum Drehzentrum 10 verlaufen, wobei der Zylinder 9 aus drei Rotorsegmenten 9a, 9b, 9c zusammengesetzt ist. Alle Rotorsegmente 9a, 9b, 9c sind in Drehrichtung 10c um einen entsprechenden Bruchteil des Winkels α gleichmässig gegeneinander versetzt. Im vorliegenden Ausführungsbeispiel sind drei Rotorsegmente 9a, 9b, 9c dargestellt. Es sind jedoch auch mehr oder weniger Rotorsegmente möglich, die vorteilhafterweise alle den gleichen Winkelversatz in Drehrichtung 10c aufweisen. In Richtung des Drehzentrums 10 betrachtet entspricht die Höhe eines Rotorsegmentes 9a, 9b, 9c vorteilhafterweise der Breite eines Statorsegmentes 1, 21. Eine weitere nicht dargestellte Ausführungsform eines Rotors 31 besteht in einer Kombination der Ausführungsform gemäss Fig. 3c mit der Ausführungsform gemäss Fig. 3b. Der Rotor besteht aus zum Beispiel drei gegeneinander versetzten Rotorsegmenten, wobei die Nuten 11 und Polzähne 12, wie in Fig. 3b beschrieben, einen Neigungswinkel δ gegenüber dem Drehzentrum 10 aufweisen.

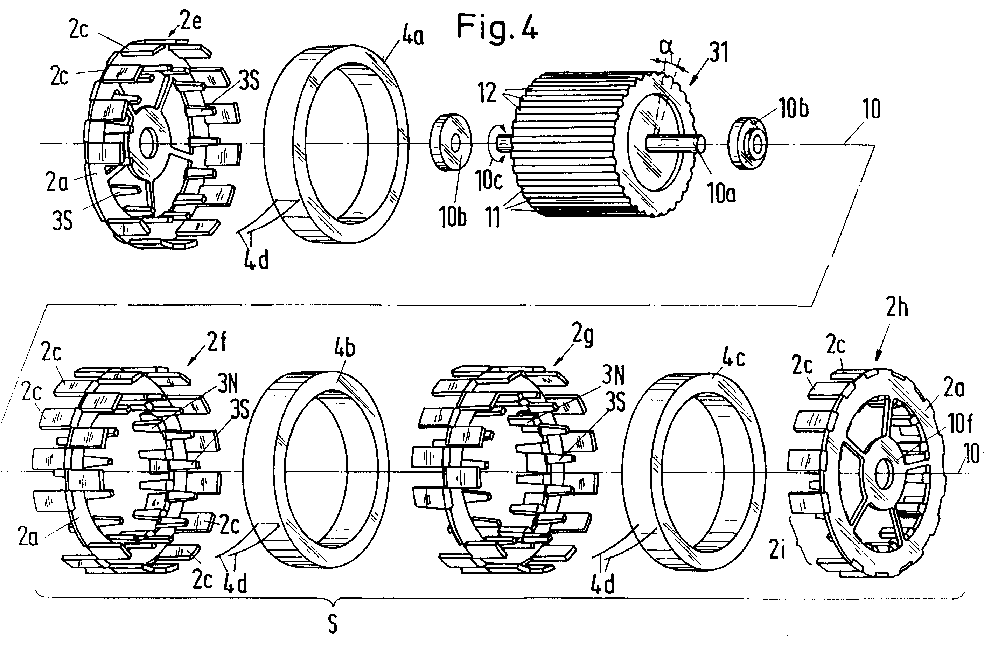

Fig. 4 zeigt den erfindungsgemässen Reluktanzmotor beispielhaft in der Ausführungsform als unipolarer 3-Phasen-Reluktanzschrittmotor. Um den Rotor 31 durch von aussen einwirkende elektromagnetische Felder in Rotation zu versetzen bedarf es mindestens dreier Statorsegmente 1, 21, wobei mindestens zwei Statorsegmente 1 eine Erregerwicklung 4 aufweisen, und das dritte Statorsegment entweder ein Permanentmagnet 7 oder ebenfalls eine Erregerwicklung 4 aufweist. In der mit Fig.4 dargestellten Ausführungsform setzt sich der Stator aus drei Statorsegmenten zusammen, wobei das elektromagnetische Feld in allen drei Statorsegmenten durch Erregerwicklungen 4a, 4b, 4c erzeugt wird, wobei alle Erregerwicklungen 4a, 4b, 4c über elektrische Leiter 4d mit einer nicht dargestellten Ansteuerungsvorrichtung verbunden sind. Alle Bauteile des Reluktanzschrittmotors sind kreissymmetrisch zum Drehzentrum 10 angeordnet, so der Rotor 31 mit seiner Drehwelle 10a, die beiden Lager 10b der Drehwelle 10a als auch die Erregerwicklungen 4a, 4b, 4c und die flussleitenden Bleche 2e,2f,2g,2h.

Jede Erregerwicklung 4a, 4b, 4c wird von einem Eisenjochring 2 sowie den Polzähnen 3N, 3S ringförmig umschlossen. Im dargestellten Ausführungsbeispiel setzt sich jeder Eisenjochring aus zwei Teilkomponenten zusammen, wobei Zwischenbleche 2f, 2g sowie Endbleche 2e, 2h Verwendung finden, und wobei die Polzähne 3N, 3S ein Teil der Zwischenbleche 2f,2g beziehungsweise der Endbleche 2e, 2h bilden. Die im Ausführungsbeispiel dargestellten Endbleche 2e, 2h setzen sich zusammen aus einem kreisförmigen, senkrecht zum Drehzentrum 10 stehenden, seitlichen Teil 2a, an dessen innerer kreisförmigen Öffnung die Polzähne 3S senkrecht zum Teil 2a stehen und regelmässig über den inneren Umfang verteilt angeordnet sind. Am äusseren Umfang des Teiles 2a sind senkrecht zu dieser stehend die Teile 2c des Eisenjochringes angeordnet, wobei die Breite eines Teiles 2c in Richtung des Drehzentrums 10 ungefähr der Breite einer Erregerspule 4a, 4b, 4c entspricht und die Teile 2c derart in Drehrichtung 10c beabstandet sind, dass der Abstand zwischen zwei Teilen 2c ungefähr der Breite eines Teile 2c in Drehrichtung 10c entspricht. Das als Gegenstück zum Endblech 2e gearbeitete Zwischenblech 2f weist in Richtung zum Endblech 2e Teile 2c sowie Polzähne 3N auf, derart, dass ein Zwischenblech 2f und ein Endblech 2e über eine Erregerwicklung 4a stülpbar sind und durch die gegenseitige Berührung der Teile 2c sowie der Teile 2a von Zwischenblech 2f und Endblech 2e ein Eisenjochring 2 entsteht, der das magnetische Feld von den Polzähnen 3N des Zwischenbleches 2f zu den Polzähen 3S des Endbleches 2e leitet. Die Polzähne 3N, 3S kommen dabei, wie z.B. mit Fig. 1a ausführlich beschrieben, auf der Innenseite des Statorsegmentes 1 zu liegen.

Ein Zwischenblech 2f, 2g weist einen den Endblechen 2e, 2h vergleichbaren Aufbau auf, wobei die Zwischenbleche 2f, 2g im Vergleich zu den Endblechen 2e, 2h beidseitig in Richtung des Drehzentrums 10 Polzähne 3N, 3S und Teile 2c des Eisenjochringes aufweisen, derart, dass zwei Zwischenbleche 2f, 2g oder z.B. ein Zwischenblech 2f und ein Endblech 2e über eine Erregerwicklung 4a stülpbar sind und derart einen Eisenjochring 2 bilden. Sowohl bei einem Endblech 2e, 2h als auch bei einem Zwischenblech 2f, 2g können die Polzähne 3N, 3S sowie die Teile 2c entweder auf dem kreisförmigen Teil 2a des Eisenjochringes befestigt sein oder mit dem kreisförmigen Teil 2a aus einem Stück gefertigt sein. Sowohl Zwischenbleche 2f, 2g als auch Endbleche 2e, 2h können im Teil 2c des Eisenjochringes eine Aussparung 2i aufweisen, um z.B. die elektrischen Anschlussleitungen 4d der Erregerwicklungen 4a nach aussen zu führen. Die Endbleche 2e, 2h können zusätzlich eine Halterung 10f für die Lager 10b bzw. die Drehwelle 10a des Rotors 31 aufweisen.

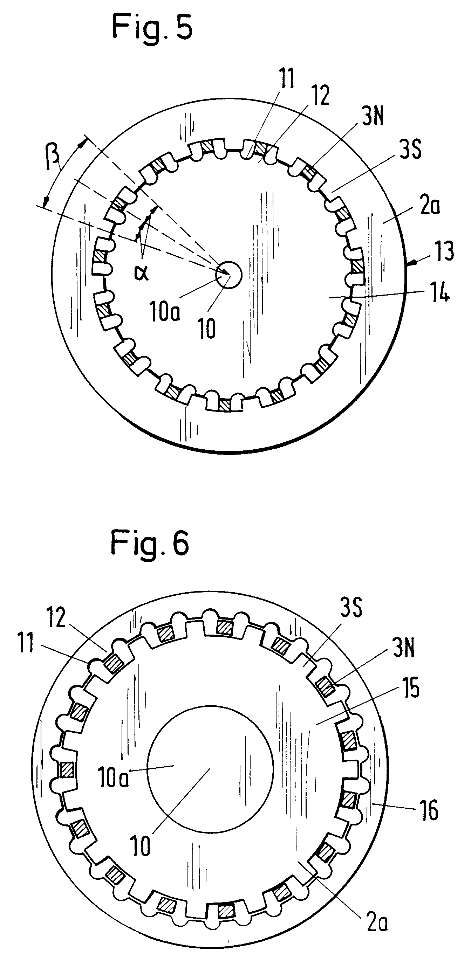

Fig. 5 zeigt einen Querschnitt durch einen als Innenläufer konzipierten Reluktanzmotor, wie er in Fig. 4 dargestellt ist. Der durch ein Zwischenblech 2f entlang dem seitlichen Teil 2a verlaufende Querschnitt zeigt die parallel zum Drehzentrum 10 in die Tiefe weisenden Polzähne 3S sowie die geschnittenen, vom Teil 2a ausgehenden entgegengesetzten Polzähne 3N. Der innenliegende Rotor 14 weist Nuten 11 und Polzähne 12 auf, wobei die Polzähne 12 sowie benachbarte Polzähne 3N, 3S entgegengesetzter Polarität unter einem Abstandswinkel α beanstandet sind. Pole 3N oder 3S gleicher Polarität sind entsprechend mit einem Abstandswinkel β beanstandet, der dem Zweifachen des Abstandswinkels α entspricht.

Fig. 6 zeigt einen Querschnitt durch einen als Aussenläufer konzipierten Reluktanzmotor. Der Querschnitt verläuft wieder durch ein Zwischenblech 2f entlang dem seitlichen Teil 2a, wobei die Zwischenbleche und Endbleche derart ausgestaltet sind, dass sie zusammen einen innenliegenden Stator 15 bilden, so dass die Polzähne 3N, 3S parallel zum Drehzentrum 10 auf die Aussenseite des innenliegenden Stators 15 zu liegen kommen. Der aussenliegende Rotor 16 ist z.B. als Hohlzylinder oder als glockenförmiger Hohlzylinder ausgeführt, der auf der gegen das Drehzentrum 10 weisenden Oberfläche Nuten 11 und Polzähne 12 aufweist. Der innenliegende Stator 15 kann im Zentrum entlang dem Drehzentrum 10 z.B. eine Drehwelle 10a des aussenliegenden Rotors 16 oder auch einen Hohlraum aufweisen.

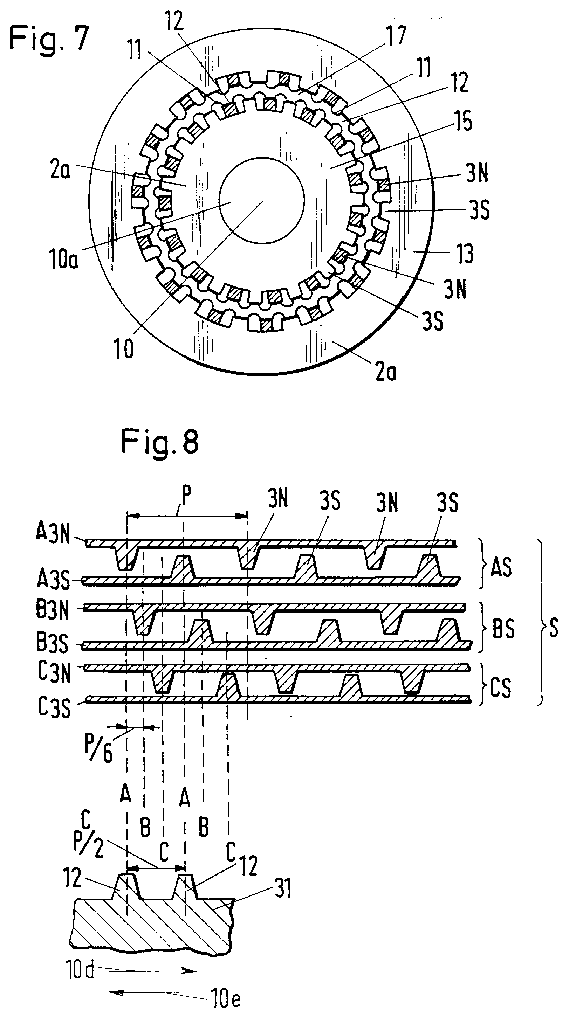

Fig. 7 zeigt einen Querschnitt durch einen als Ringläufer konzipierten Reluktanzmotor. Der Querschnitt verläuft durch ein Zwischenblech 2f eines innenliegenden Stators 15 sowie durch das Zwischenblech 2f eines aussenliegenden Stators 13 jeweils entlang dem seitlichen Teil 2a. Sowohl der innenliegende Stator 15 als auch der aussenliegende Stator 13 weisen je Polzähne 3N und 3S auf. Der dazwischenliegende Rotor 17 ist als Hohlzylinder oder als glockenförmiger Hohlzylinder ausgestaltet und weist auf der parallel zum Drehzentrum 10 verlaufenden Innenfläche wie auf der Aussenfläche Nuten 11 und Polzähne 12 auf. Ein Vorteil der dargestellten Ausführungsform ist darin zu sehen, dass das Drehmoment gegenüber einer Ausführungsform gemäss Fig. 5 oder Fig. 6 verdoppelt werden kann, bei gleichem Aussendurchmesser sowie gleicher Länge des Reluktanzmotors.

Eine weitere Ausführungsform des in Fig. 7 dargestellten Reluktanzmotors mit Ringläufer besteht darin, dass zwei Statorsegmente 1,21 einen innenliegenden Stator 14 bilden und ein einziges Statorsegment 1,21 einen aussenliegenden Stator 13. Der aussenliegende Stator 13 kann bezüglich der Richtung des Drehzentrums 10 derart angeordnet sein, dass er vollständig über dem innenliegenden Stator 14 zu liegen kommt, sodass die minimal notwendige Bautiefe des Reluktanzmotors in Richtung des Drehzentrums 10 durch die Breite der beiden innenliegenden Statorsegmenten 1,21 bestimmt wird. Dasselbe gilt natürlich auch für den umgekehrten Fall, dass der innenliegende Stator 14 ein einziges Statorsegment 1,21 aufweist und der aussenliegende Stator 13 zwei Statorsegmente 1,21. Der innenliegende Stator 14 wie auch der aussenliegende Stator 13 können auch noch zusätzliche Statorsegmente 1,21 enthalten.

Um den Rotor 31 bezüglich dem Stator S in Bewegung zu versetzen, in eine Verschiebungsrichtung 10d nach rechts bezüglich dem Stator S oder in eine Verschiebungsrichtung 10e nach links bezüglich dem Stator S, bedarf es eines elektromagnetischen Drehfeldes im Stator S. In Fig. 8 ist die Abwicklung eines Stator S dargestellt, mit einer Aufsicht auf die Polzähne 3N, 3S dreier Statorsegmente AS, BS und CS. Weiter ist die Abwicklung eines Rotors 31 mit Polzähnen 12 dargestellt. Diese Darstellung gilt sowohl für einen Reluktanzmotor konzipiert als Aussenläufer wie auch für einen Reluktanzmotor konzipiert als Innenläufer sowie für den Grenzfall zwischen diesen beiden Arten von Reluktanzmotoren, dem jeweils bei gegen unendlich strebendem Radius von Stator und Rotor entstehenden Reluktanzmotor konzipiert als Linearmotor. Im Statorsegment AS sind die Pole 3N über die Flussleitstücke A3N und A3S mit den Polen 3S entgegengesetzter Polarität verbunden. Das gleiche gilt für die Statorsegmente BS und CS mit den entsprechenden Flussleitstücken B3N, B3S, respektive C3N, C3S. Die Statorsegmente AS, BS, CS können einzeln ausgebildet sein, oder, wie in Fig. 4 durch die Zwischenbleche 2f, 2g dargestellt, derart ausgestaltet sein, dass zum Beispiel die Flussleitstücke A3S, B3N zweier aneinandergrenzender Statorsegmente wie AS und BS, als ein Element ausgeführt sind. Die Pole gleicher Polarität 3N respektive 3S jeweils eines Statorsegments AS, BS, CS weisen eine Polabstand P, entsprechend dem Abstandswinkel β auf. Die Polzähne 12 auf dem Rotor 31 weisen einen Polabstand P/2 entsprechend dem Abstandwinkel α auf. Die Polpaare 3N, 3S der einzelnen Statorsegmente AS, BS, CS sind relativ zueinander um je einen Abstand P/6 in Drehrichtung 10d oder 10e verschoben. Bei aktiver Erregerwicklung des Statorsegmentes AS ist der Rotor 31 bestrebt eine Stellung minimaler Reluktanz zu erlangen, das heisst eine Stellung mit möglichst kleinem Luftspalt zwischen den Polzähnen 12 und den Polzähnen 3N, 3S des Statorsegmentes AS. Fig. 8 zeigt den Rotor 31 in dieser Stellung, wobei mit A die Stellung der minimalen Reluktanz bezüglich dem Stator S bezeichnet ist. Entsprechend liegt die Stellung minimaler Reluktanz bei aktiver Erregerwicklung des Statorsegmentes BS bei B, respektive bei aktiver Erregerwicklung des Statorsegmentes CS bei C. Natürlich lassen sich auch mehr als drei Statorsegmente AS, BS, CS zu einem Stator S aneinanderreihen. Dies kann dazu dienen das Drehmoment des Rotors 31 zu vergrössern. Dabei wird ausgehend von drei Statorsegmenten ein Vielfaches von drei Statorsegmenten derart in Richtung des Drehzentrums 10 aneinandergereiht, dass die zusätzlichen Pole 3N, 3S in die bereits vorgegebenen Stellungen A, B, C zu liegen kommen. Mit zusätzlichen Statorsegmenten lässt sich jedoch auch die Schrittweite des Rotors 31 verkleinern, indem bei konstantem Polabstand P die Polzähne 3N, 3S der einzelnen Statorsegmente derart gegeneinander versetzt werden, dass innerhalb eines Polabstandes P zusätzliche Stellungen minimaler Reluktanz entstehen. Mit 4 Statorsegmenten würde der Abstand der Stellungen minimaler Reluktanz auf P/8 reduziert, entsprechend mit 5 Statorsegmenten auf P/10 usw. Die Anzahl einzelner Schritte, die der Reluktanzmotor pro Umdrehung auszuführen in der Lage ist, hängt somit ab von der Anzahl der Polzähne 3N, 3S pro Statorsegment sowie von der Anzahl innerhalb eines Polabstandes P gegenseitig versetzt angeordneter Statorsegmente.

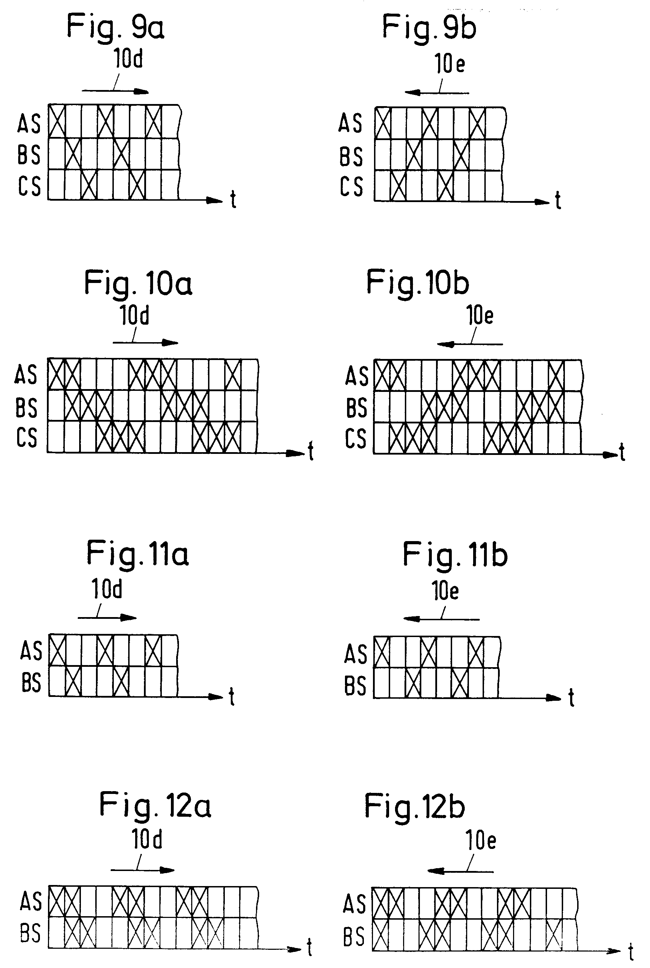

Um im Stator S ein magnetisches Drehfeld zu erzeugen werden die Erregerwicklungen der einzelnen Statorsegmente AS, BS, CS mit einer entsprechenden zeitlichen Abfolge durch eine nicht dargestellte Ansteuerungsvorrichtung angesteuert. Fig. 9a zeigt eine mögliche Ansteuerung der drei Statorsegmente AS, BS, CS um den Rotor 31 zu einer Bewegung in Richtung 10d zu veranlassen. Die mit "X" bezeichnete Stelle deutet ein stromdurchflossenes, erregtes Statorsegment an. Beginnend mit dem Statorsegment AS wird dieses aktiviert, daraufhin BS aktiviert und gleichzeitig AS deaktiviert, worauf CS aktiviert und BS deaktiviert wird. Dieser Zyklus wird kontinuierlich fortgesetzt, sodass sich der Rotor 31 gemäss Fig. 8 von der Stellung minimaler Reluktanz A zur Stellung B und weiter zur Stellung C bewegt und daraufhin, entsprechend der zyklischen Ansteuerung der Statorsegmente, sich weiter in Richtung 10d bewegt. Um den Rotor 31 in umgekehrter Drehrichtung 10e zu bewegen werden die Statorsegmente, wie in Fig. 9b dargestellt, in einer anderen Abfolge angesteuert, z.B. derart, dass nach AS, das Statorsegment CS und daraufhin das Statorsegment BS aktiviert respektive deaktiviert wird.

Durch die Anordnung der Polzähne im Stator S und Rotor 31 sind die Stellungen minimaler Reluktanz A, B, C festgelegt. Der Rotor 31 bewegt sich entsprechen der Ansteuerung der Statorsegmente, ähnlich einem Schrittmotor, sprungartig zwischen den stabilen Lagen minimaler Reluktanz A, B, C. Daher lassen sich mit dem erfindungsgemässen Reluktanzmotor, wie bei Schrittmotoren üblich, einzelne Schritte gleicher Schrittweite ausführen, wobei die Geschwindigkeit respektive die Drehrichtung nachfolgender Schritte entsprechend der Ansteuerung der Statorsegmente AS, BS, CS durch die Ansteuervorrichtung bestimmbar ist.

Fig. 10a zeigt eine weitere Ansteuerungsmöglichkeit der Statorsegmente AS, BS, CS um eine Rotor 31 in Richtung 10d zu bewegen, wobei mit "X" wiederum die aktiven Segmente bezeichnet sind. Während dem Übergang der Ansteuerung des Statorsegmentes AS zur Ansteuerung des Statorsegmentes BS sind während einer gewissen Zeit beide Statorsegmente AS und BS aktiv. Dadurch werden die Stellungen minimaler Reluktanz A, B, C künstlich verdoppelt, indem durch die gleichzeitige Aktivierung der Statorsegmente AS und BS zwischen A und B eine zusätzliche Stellung minimaler Reluktanz entsteht, die vom Rotor 31 eingenommen wird. Fig. 10b zeigt eine weitere Ansteuerungsmöglichkeit der Statorsegmente AS, BS, CS um, bei künstlich verdoppelter Schrittanzahl, den Rotor 31 in Drehrichtung 10e zu bewegen.

Die Drehrichtung des Rotors 31 wird durch die Abfolge der Ansteuerung der Statorsegmente AS, BS, CS festgelegt. Der Reluktanzmotor kann mit Gleich- oder Wechselspannung betrieben werden, wobei die Stromrichtung weder bei Gleichspannung noch bei Wechselspannung einen Einfluss auf die Drehrichtung des Reluktanzmotors ausübt.

Um den Rotor 31 des erfindungsgemässen Reluktanzmotors in Bewegung zu setzen bedarf es mindestens dreier Statorsegmente, wobei zwei Statorsegmente eine Erregerspule 4, wie z.B. in Fig. 1a dargestellt, aufzuweisen haben. Das dritte Statorsegment kann, wie z.B. in Fig. 2 dargestellt,einen Permanentmagneten 7 beinhalten. Wird ein Statorsegment mit Erregerwicklung 1 durch ein Statorsegment mit Permanentmagnet 21 ersetzt, so würde dies im Ausführungsbeispiel gemäss Fig. 4 zur Folge haben, dass eine Erregerwicklung wie z.B. die Erregerwicklung 4c durch einen Permanentmagneten 7 ersetzt wird, wobei auf die die Erregerwicklung 4c umschliessenden Teile 2c des Eisenjochringes am Endblech 2h sowie am Zwischenblech 2g verzichtet werden muss. Fig. 11a zeigt den Ablauf der Ansteuerung der Statorsegmente AS und BS um den Rotor 31 in Vollschritten in Richtung 10d zu bewegen, unter Verwendung eines Permanentmagneten im Statorsegment CS. Durch den Permanentmagneten 7 im Statorsegment CS verfügt der Rotor 31 im elektrisch nicht erregten Zustand über ein Haltemoment. Ist keines der Statorsegmente AS oder BS erregt, so fällt oder verharrt der Rotor in eine durch das Statorsegment CS festgelegte nächstliegende Lage minimaler Reluktanz. Im aktiven Zustand der Statorsegmente AS oder BS muss, um den Rotor 31 um einen Vollschritt weiterzubewegen, deren magnetische Feldstärke derart bemessen sein, dass das im Statorsegment CS vorhandene permanente Magnetfeld überwunden wird. Fig. 11b zeigt den Ablauf der Ansteuerung der Statorsegmente AS und BS um den Rotor 31 in Vollschritten in Richtung 10e zu bewegen. Fig. 12a zeigt eine Abfolge der Ansteuerung der Statorsegmente AS und BS bei der durch die gleichzeitige Aktivierung der Statorsegmente AS und BS, im Vergleich zu Fig. 11a, ein zusätzlicher Halbschritt des Rotors 31 erzeugt wird, sodass über einem Polabstand P vier Schritte, nämlich zwei Vollschritte sowie zwei Halbschritte, ausführbar sind. Der Rotor 31 bewegt sich dabei in Richtung 10d. Fig. 12b zeigt eine Abfolge der Ansteuerung der Statorsegmente AS und BS um den Rotor 31 in Richtung 10e zu bewegen.

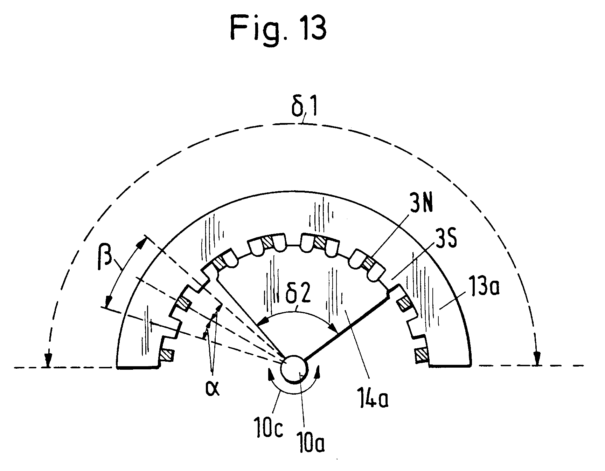

Fig. 13 zeigt einen Querschnitt durch eine Ausführungsform eines Reluktanzmotors, dessen Rotor 14a nur einen Teil eines Vollkreises, nämlich den Winkelbereich σ2 umfasst, und/oder dessen Stator 13a nur einen Teil eines Vollkreises, nämlich den Winkelbereich σl umfasst. Bildet der Rotor 14a und/oder der Stator 13a einen Vollkreis, so ist es dem Rotors 14a möglich, den gesamten Drehwinkelbereich von 360° zu überstreichen. Bilden Rotor 14a wie Stator 13a nur Teile eines Vollkreises, so kann der Rotor 14a nur Teile eines Vollkreises überstreichen.

Im Ausführungsbeispiel gemäss Fig. 4 weist der Rotor 31 durchgehend geradlinige, parallel zum Drehzentrum 10 verlaufende Nuten 11 und Polzähne 12 auf dessen Zylinderoberfläche auf. Dagegen sind, wie in Fig. 8 dargestellt, die Polzähne 3N, 3S der einzelnen Statorsegmente AS, BS, CS um ein festes Mass gegeneinander versetzt. Eine weitere Ausführungsform besteht zum Beispiel darin, dass die Polzähne 3N der Statorsegmente AS, BS, CS in Richtung des Drehzentrums 10 geradlinig hintereinander liegen, und die Polzähne 3S der Statorsegmente AS, BS, CS ebenfalls hintereinanderliegen. Dafür weist der Rotor 31 Rotorsegmente 9a, 9b, 9c auf, die jeweils der Breite eines Statorsegmentes AS, BS, CS entsprechen, wobei die Rotorsegmente 9a, 9b, 9c gegenseitig in Drehrichtung 10c einen Winkelversatz aufweisen, derart, dass wieder Stellungen minimaler Reluktanz A, B, C entstehen, die, bei drei Statoren, mit P/6 beabstandet sind.

Die in den bisherigen Ausführungsbeispielen offenbarten Stellungen minimaler Reluktanz A, B, C des Rotors 31 sind auf Grund der geometrischen Gestaltung und Anordnung der Polzähne 3N, 3S sowie der Polzähne 12 genau definiert. Verlaufen die Polzähne 3N, 3S sowie die Polzähne 12 nicht parallel zueinander, indem z.B. im Reluktanzmotor gemäss Fig.4 Statorsegmente mit schrägstehenden Polzähnen 3N, 3S gemäss Fig. 1b verwendet werden, so sind die Stellungen minimaler Reluktanz A, B, C weniger eindeutig definiert und verbreitern sich unter Umständen zu Bereichen A, B, C minimaler Reluktanz. Die Schrittbewegungen des Rotors 31 zwischen den Stellungen respektive den Bereichen minimaler Reluktanz A, B, C erfolgen dementsprechend weicher.

Höhere Drehmomente bei gleichem Durchmesser des Reluktanzmotors lassen sich durch Stapeln identischer Statorsegmente verwirklichen.

Bei einem als Linearmotor ausgeführten Reluktanzmotor dehnen sich die mit Polzähnen 3N,3S,12 bestückten Oberflächen von Stator S und Rotor 31 linear in Bewegungsrichtung 10c aus und liegen einander flächig gegenüber. Dabei kann die Länge der Rotors 31 in Bewegungsrichtung 10c auch nur ein Bruchteil der entsprechenden Ausdehnung des Stators S betragen oder umgekehrt, die Länge des Stator S nur ein Bruchteil des Länge des Rotors 31. Der Stator S kann auch auf beiden der sich in Bewegungsrichtung 10c ausdehnenden Oberflächen Polzähne 3N, 3S aufweisen, die von einem U-förmigen Rotor 31 teilweise umschlossen werden. Lässt man den Radius des in Fig. 7 dargestellten Reluktanzmotors gegen unendlich streben, so ergibt sich eine weitere Ausführungsform eines Linearmotors, der in der Mitte einen sich flächig in Bewegungsrichtung 10c ausdehnenden Rotor 31 aufweist mit Polzähnen 12 auf beiden den flächig ausgebildeten Statoren zugewandten Seiten.

## Patentansprüche

1. Elektromotor, insbesondere Reluktanzmotor mit einem Rotor (31) aus weichmagnetischem Material, wobei an dessen dem Stator (S) zugewandten Oberfläche Nuten (11) eingebracht sind, derart, dass sich zwischen den Nuten (11) Polzähne (12) ergeben, die in Bewegungsrichtung (10c) gegenseitig regelmässig beabstandet sind, und mindestens einem Stator (S), wobei jeder Stator (S) aus mindestens drei Statorsegmenten besteht, und die Statorsegmente je eine ein Magnetfeld erzeugende Vorrichtung (4, 7) sowie eine Anzahl Polzähne (3N) und eine Anzahl Polzähne (3S) entgegengesetzter Polarität aufweisen, wobei die Beabstandung der Polzähne (3N, 3S) derjenigen des Rotors (31) oder einem ganzzahligen Vielfachen davon entspricht, und wobei die den jeweiligen Statorsegmenten gegenüberliegenden Polzähne (12) des Rotors (31) und/oder die Polzähne (3N,3S) jeweiliger Statorsegmente zueinander versetzt liegen, und wobei mindestes zwei der ein Magnetfeld erzeugenden Vorrichtungen mit einer Erregerwicklung (4) bestückt sind.

2. Vorrichtung nach Anspruch 1, dadurch gekennzeichnet, dass die ein Magnetfeld erzeugende Vorrichtung (4, 7) in Richtung des magnetischen Flusses ein ringförmiges, metallisches Flussleitsystem (2a,2b,2c) aufweist, das die Polzähne (3N) mit den Polzähnen (3S) entgegengesetzer Polarität verbindet.

3. Vorrichtung nach einem der Ansprüche 1 oder 2, dadurch gekennzeichnet, dass die Polzähne (3N, 3S) der Statorsegmente und/oder die Polzähnen (12) des Rotors (31) parallel zum Drehzentrum (10) des Rotors (31) verlaufen.

4. Vorrichtung nach einem der Ansprüche 1 bis 3, dadurch gekennzeichnet, dass die Polzähne (3N, 3S) der Statorsegmente und/oder die Polzähnen (12) des Rotors (31) einen spitzen Winkel δ gegenüber dem Verlauf des Drehzentrums (10) des Rotors (31) aufweisen.

5. Vorrichtung nach einem der Ansprüche 1 bis 4, dadurch gekennzeichnet, dass jeweils Polzähne (3N, 3S) der Statorsegmente sowie die entsprechenden gegenüberliegenden Polzähnen (12) des Rotors (31) parallel zueinander verlaufen.

6. Vorrichtung nach einem der Ansprüche 1 bis 5, dadurch gekennzeichnet, dass alle ein Magnetfeld erzeugenden Vorrichtungen aus je einer Erregerwicklung (4) bestehen.

7. Vorrichtung nach einem der Ansprüche 1 bis 5, dadurch gekennzeichnet, dass mindestes eine, ein Magnetfeld erzeugende Vorrichtung aus einem Permanentmagneten (7) besteht, und die restlichen ein Magnetfeld erzeugenden Vorrichtungen aus je einer Erregerwicklung (4) bestehen, wobei jeweils mindestens doppelt so viele Erregerwicklungen (4) wie Permanentmagnete (7) vorhanden sind.

8. Vorrichtung nach einem der Ansprüche 1 bis 7, dadurch gekennzeichnet, dass eine ein Magnetfeld erzeugende Vorrichtung (4,7) sowie ein magnetisches Flussleitsystem (2a,2b,2c) zusammen ein Statorsegment (1,21) bilden.

9. Vorrichtung nach einem der Ansprüche 1 bis 8, dadurch gekennzeichnet, dass der Rotor (31) aus einem zylinderförmigen Segment besteht.

10. Vorrichtung nach einem der Ansprüche 1 bis 9, dadurch gekennzeichnet, dass der Stator (S) ringförmig als Kreissegment ausgebildet ist.

11. Vorrichtung nach einem der Ansprüche 1 bis 10, dadurch gekennzeichnet, dass das Drehzentrum (10) eines zylinderförmigen Rotors (31) durch eine von mindestens einem ringförmigen Stator (S) gebildete Mittellinie verläuft, wobei jede ein Magnetfeld erzeugende Vorrichtung (4, 7) ringförmig, senkrecht zum Drehzentrum (10) stehend und konzentrisch zum Drehzentrum (10) verlaufend ausgebildet ist, und wobei die Polzähne (3N, 3S) der Statorsegmente in Drehrichtung (10c) mit einem Winkel α beabstandet sind.

12. Vorrichtung nach Anspruch 11, dadurch gekennzeichnet, dass die Polzähne (3S, 3N) jeweiliger Statorsegmente (1, 21) gegenüber den Polzähnen (3S, 3N) der restlichen Statorsegmenten (1, 21) in Drehrichtung (10c) des Rotors (31) winkelmässig derart versetzt liegen, dass die Polzähne (3N, 3S) der einzelnen Statorsegmente (1, 21) innerhalb eines Abstandswinkels (β) eines Polpaares (3N) respektive eines Polpaares (3S) in regelmässigen Winkelabständen, jedoch alle gegenseitig winkelmässig versetzt liegen, und dass die Nuten (11) und die Polzähne (12) des Rotors (31) auf der gesamten Rotorlänge in einer Flucht liegen.

13. Vorrichtung nach Anspruch 11, dadurch gekennzeichnet, dass die Polzähne (3S, 3N) gleicher Polarität aller Statorsegmente (1, 21) parallel zum Drehzentrum (10) in einer Flucht liegen, und dass die Nuten (11) respektive die Polzähe (12) des Rotors (31) jeweils im Uebergangsbereich zweier benachbarter Statorsegmente (1, 21) winkelmässig in Drehrichtung (10c) des Rotors (31) derart einen Versatz aufweisen, dass die Polzähne (12) der entsprechenden Statorsegmente (1, 21) innerhalb des Abstandwinkels (β) eines Polpaares (3N) respektive (3S) in regelmässigen Winkelabständen, jedoch alle gegenseitig winkelmässig versetzt, auf der Oberfläche des Rotors (31) angeordnet sind.

14. Vorrichtung nach einem der Ansprüche 1 bis 13, dadurch gekennzeichnet, dass der Rotor (14) innen und der Stator (13) aussen liegt.

15. Vorrichtung nach einem der Ansprüche 1 bis 13, dadurch gekennzeichnet, dass der Rotor (14) aussen und der Stator (13) innen liegt.

16. Vorrichtung nach einem der Ansprüche 1 bis 13, dadurch gekennzeichnet, dass der Rotor (17) als hohler Zylinder ausgebildet auf der Innen- wie auf der Aussenfläche verlaufende Nuten (11) und Polzähne (12) aufweist, denen ein äusserer Stator (13) respektive ein innerer Stator (15) gegenüberliegen.

17. Vorrichtung nach einem der Ansprüche 1 bis 13, dadurch gekennzeichnet, dass der Rotor (17) mindestens teilweise als hohler Zylinder ausgebildet ist, wobei der Zylinder auf der Innen- wie auf der Aussenfläche Nuten (11) und Polzähne (12) aufweist, und wobei mindestens zwei Statorsegmente (1, 21) über der Aussenfläche angeordnet sind und mindestens ein Statorsegment (1,21) über der Innenfläche angeordnet ist.

18. Vorrichtung nach einem der Ansprüche 1 bis 13, dadurch gekennzeichnet, dass der Rotor (17) mindestens teilweise als hohler Zylinder ausgebildet ist, wobei der Zylinder auf der Innen- wie auf der Aussenfläche Nuten (11) und Polzähne (12) aufweist, wobei mindestens ein Statorsegment (1,21) über der Aussenfläche angeordnet ist und mindestens zwei Statorsegmente (1,21) über der Innenfläche angeordnet sind.

19. Vorrichtung nach einem der Ansprüche 2 bis 18, dadurch gekennzeichnet, dass zwei Zwischenbleche (2f) oder ein Zwischenblech (2f) und ein Endlblech (2e), von je einer Seite in Richtung des Drehzentrums (10) über eine Erregerwicklung (4a) gestülpt, ein ringförmiges magnetisches Flussleitsystem bilden.

20. Vorrichtung nach Anspruch 19, dadurch gekennzeichnet, dass die Polzähne (3S, 3N) ebenfalls Bestandteil der Zwischenbleche (2f) respektive der Endbleche (2e) sind.

21. Vorrichtung nach einem der Ansprüche 1 bis 8, dadurch gekennzeichnet, dass sich die mit Polzähnen (3N, 3S, 12) besetzten Oberflächen des Rotors (31) respektive mindestens eines Stators (S) in Bewegungsrichtung (10c) linear ausdehnen.

22. Vorrichtung nach Anspruch 21, dadurch gekennzeichnet, dass die Länge des Rotors (31) in Bewegungsrichtung (10c) nur ein Bruchteil der entsprechenden Ausdehnung des Stators (S) beträgt.

23. Vorrichtung nach Anspruch 21, dadurch gekennzeichnet, dass die Länge des Stators (S) in Bewegungsrichtung (10c) nur ein Bruchteil der entsprechenden Ausdehnung des Rotors (31) beträgt.

24. Vorrichtung nach einem der Ansprüche 21 bis 23, dadurch gekennzeichnet, dass der Rotor (31) den Stator (S) senkrecht zur Bewegungsrichtung (10c) U-förmig umschliesst, wobei die beiden dem Rotor (31) zugewandten Seiten des Stators (S) Polzähne (3N, 3S) aufweisen.

25. Vorrichtung nach einem der Ansprüche 21 bis 24, dadurch gekennzeichnet, dass die mit Polzähnen (3N, 3S) bestückten Seiten mindestens zweier Statoren (S) einander gegenuberliegen, wobei zwischen den Statoren ein Rotor (31) liegt, der auf beiden den den Statoren (S) zugewandten Seiten Polzähne (12) aufweist.

26. Anzeigeinstrument mit einem Reluktanzmotor gemäss einem der Ansprüche 1 bis 25 zum Anzeigen von Messgrössen mittels einer mechanisch beweglichen Anzeigevorrichtung.

27. Anzeigeinstrument nach Anspruch 26 mit digitaler Ansteuerung.

28. Messwandler mit einem Reluktanzmotor gemäss einem der Ansprüche 1 bis 25 zum Wandeln einer mechanischen Drehung in ein elektrisches Signal.
